# EUROPÄISCHE PATENTSCHRIFT

(11) **EP 3 344 674 B1**
(45) Veröffentlichungstag und Bekanntmachung des Hinweises auf die Patenterteilung: **16.09.2020**
(21) Anmeldenummer: 16819580.8
(22) Anmeldetag: 27.12.2016
(51) Int. Cl.: C08G 18/76, B41M 5/28, C08G 18/10, C08G 18/18, C08G 18/24, C08G 18/32, C08G 18/42

(54) **THERMOCHROMER POLYURETHANSCHAUM**
THERMOCHROMIC POLYURETHANE FOAM
MOUSSE DE POLYURÉTHANE THERMOCHROME

(30) Priorität: 12.01.2016 DE 102016000144
(43) Veröffentlichungstag der Anmeldung: 11.07.2018
(73) Patentinhaber: PCC Prodex GmbH, 45141 Essen (DE)
(72) Erfinder: FACH, Thomas, 45259 Essen (DE)
(74) Vertreter: Cohausz & Florack
(86) Internationale Anmeldenummer: PCT/EP2016/082718
(87) Internationale Veröffentlichungsnummer: WO 2017/121615

(56) Entgegenhaltungen:
- EP-A1- 2 253 652

## Beschreibung

Die vorliegende Erfindung betrifft einen Polyurethanschaum umfassend ein thermochromes Farbmittel, ein Verfahren zur Herstellung des erfindungsgemäßen Polyurethanschaums sowie die Verwendung des Polyurethanschaums für eine Polierscheibe, eine Schwammpore oder Isoliermaterial. Die Erfindung betrifft ferner eine Polierscheibe, eine Schwammpore sowie Isoliermaterial enthaltend den erfindungsgemäßen Polyurethanschaum.

Polyurethane werden üblicherweise durch Polyaddition von zwei- oder höherwertigen Alkoholen mit zwei- oder höherwertigen Isocyanaten erhalten. Bei Einsatz von Alkoholen oder Isocyanaten mit einer Wertigkeit von höher als zwei werden normalerweise verzweigte und vernetzte Polyurethane erhalten. Polyurethanschäume werden üblicherweise erhalten, wenn die Polyaddition des Alkohols und des Isocyanats in Gegenwart eines Treibmittels, beispielsweise eines Treibgases wie Pentan, Methylenchlorid oder Kohlendioxid, oder in Gegenwart von Wasser durchgeführt wird. Gefärbte Polyurethanschäume werden normalerweise durch Zusatz von Farbmitteln bei der Herstellung erhalten.

Verschiedene Arten von Farbmitteln sind bekannt. Als Farbmittel können sowohl Farbstoffe als auch Pigmente verwendet werden, wobei Farbstoffe üblicherweise in einem Lösungsmittel löslich sind, Pigmente jedoch nicht. Farbmittel können auch mehrere Bestandteile umfassen. Weiterhin sind Farbstoffe bekannt, die ihre färbende Wirkung bei unterschiedlichen Temperaturen in gleicher Weise zeigen. Zusätzlich sind Farbmittel bekannt, die ihre färbende Wirkung in Abhängigkeit der Temperatur des Gegenstands, in dem diese Farbmittel enthalten sind, zeigen. So zeigen manche Farbmittel ihre färbende Wirkung nur bis zu einer bestimmten Temperatur. Bei höheren (oder tieferen Temperaturen) besitzen sie keine färbenden Eigenschaften. Diese Fähigkeit, eine färbende Wirkung in Abhängigkeit der Temperatur zu zeigen, wird auch als Thermochromie bezeichnet. Entsprechende Substanzen werden thermochrome Substanzen oder thermochrome Farbmittel genannt.

Polyurethanschäume werden häufig zur Herstellung von Matratzen, Kissen, Polstermöbeln, Schwämmen, als Verpackungsmaterial, Isoliermaterial, zur Beschichtung von Teppichen etc. eingesetzt.

Ebenfalls ist es bekannt, Polyurethanschäume als Komponente von Polierscheiben, zum Beispiel für Lacke, einzusetzen.

Beim Polieren eines Lacks mit einer Polyurethanschaumpolierscheibe können Temperaturen entstehen, die so hoch sind, dass der Lack beschädigt werden kann. Um diese kritische Temperatur anzuzeigen, schlägt die EP 2 253 652 A1 einen Polyurethanschaum vor, der ein thermochromes Farbmittel umfasst, so dass diese thermochromen Polyurethanschäume Farbumschläge von farbig nach farblos zeigen. Die EP 2 253 652 A1 macht jedoch keine Angaben über die mechanischen Eigenschaften der Polyurethanschäume.

Die EP 0 231 030 A2 beschreibt ebenfalls Polyurethanschäume, die durch Zusatz einer thermochromen Zusammensetzung eine bestimmte Temperatur durch einen Farbwechsel anzeigen können. Die mechanischen Eigenschaften dieser thermochromen Polyurethanschäume sind jedoch unbefriedigend, insbesondere liegt die Zugfestigkeit der Polyurethanschäume gemäß der Ausführungsbeispiele der EP 0 231 030 A2 unter 200 kN/m² entsprechend unter 200 kPa.

Ausgehend vom voranstehend erläuterten Stand der Technik bestand eine Aufgabe der Erfindung darin, thermochrome Polyurethanschäume mit guten mechanischen Eigenschaften, insbesondere mit einer guten Zugfestigkeit, bereitzustellen.

Diese Aufgabe wird erfindungsgemäß durch den thermochromen Polyurethanschaum gemäß Anspruch 1, das Herstellungsverfahren gemäß Anspruch 10, die Verwendung gemäß Anspruch 12, die Polierscheibe gemäß Anspruch 13, die Schwammpore gemäß Anspruch 14 sowie das Isoliermaterial gemäß Anspruch 15 gelöst.

Vorteilhafte Ausgestaltungen der Erfindung sind in den abhängigen Ansprüchen angegeben und werden nachfolgend im Einzelnen erläutert.

Die Erfindung stellt einen thermochromen Polyurethanschaum hergestellt durch Umsetzung mindestens eines Polyesterpolyols mit mindestens einer isocyanatgruppenhaltigen Verbindung in Gegenwart mindestens eines thermochromen Farbmittels, wobei die Umsetzung in Gegenwart mindestens eines di- oder trifunktionalen Kettenverlängerers erfolgt und die mindestens eine isocyanatgruppenhaltige Verbindung ein auf einem Polyesterpolyol basierendes isocyanatgruppenhaltiges Prepolymer ist, bereit.

Überraschend hat sich gezeigt, dass durch die Umsetzung mindestens eines Polyesterpolyols mit mindestens einer isocyanatgruppenhaltigen Verbindung in Gegenwart mindestens eines thermochromen Farbmittels und mindestens eines di- oder trifunktionalen Kettenverlängerers, wobei die mindestens eine isocyanatgruppenhaltige Verbindung ein auf einem Polyesterpolyol basierendes isocyanatgruppenhaltiges Prepolymer ist, thermochrome Polyurethanschäume mit guten mechanischen Eigenschaften, insbesondere mit einer guten Zugfestigkeit, erhalten werden können. Weiterhin hat sich gezeigt, dass es mit der Erfindung möglich ist, thermochrome Polyurethanschäume mit einem höheren Gehalt an thermochromem Farbmittel zu erzielen. Dies führt insbesondere zu einem deutlich sichtbareren Farbumschlag.

Von besonderer praktischer Bedeutung ist die Erfindung insbesondere für Polierscheiben, Isoliermaterial, insbesondere für chemische Reaktoren, sowie für Schwammporen. In diesen Bereichen ist ein deutlicher visueller Eindruck durch den Farbumschlag bei Erreichen einer bestimmten, unter Umständen kritischen Temperatur, besonders hilfreich.

Die Umsetzung zur Herstellung des erfindungsgemäßen thermochromen Polyurethanschaums findet in Gegenwart mindestens eines di- oder trifunktionalen Kettenverlängerers statt. Kettenverlängerer sind Substanzen, die mehr als eine funktionelle Gruppe tragen, die mit einer Isocyanatgruppe reagieren kann. Difunktionale Kettenverlängerer weisen insbesondere zwei funktionelle Gruppen auf, die jeweils mit einer Isocyanatgruppe reagieren können. Trifunktionale Kettenverlängerer weisen insbesondere drei funktionelle Gruppen auf, die jeweils mit einer Isocyanatgruppe reagieren können. Dabei können die mechanischen Eigenschaften des thermochromen Polyurethanschaums in Abhängigkeit der Anzahl der funktionellen Gruppen des Kettenverlängerers eingestellt werden. Ferner wurde gefunden, dass der Gehalt an thermochromem Farbmittel, der in den thermochromen Polyurethanschaum eingebaut werden kann, mit der Anzahl an funktionellen Gruppen des Kettenverlängerers, die mit Isocyanaten reagieren können, sinkt.

Beispiele für funktionelle Gruppen, die mit einer Isocyanatgruppe reagieren können, sind insbesondere Hydroxylgruppen (-OH) und Amingruppen (zum Beispiel primäre Amine R-NH₂ und sekundäre Amine RR'NH). Ferner weisen Kettenverlängerer insbesondere ein Molekulargewicht im Bereich von 60 g/mol bis 300 g/mol auf. Kettenverlängerer können monodisperse Substanzen sein. In einer monodispersen Substanz haben alle Moleküle insbesondere dasselbe Molekulargewicht. Vorzugsweise weist der mindestens eine di- oder trifunktionale Kettenverlängerer des erfindungsgemäßen thermochromen Polyurethanschaums ein Molekulargewicht im Bereich von 60 g/mol bis 300 g/mol auf und/oder ist eine monodisperse Substanz. Der mindestens eine di- oder trifunktionale Kettenverlängerer kann auch ein Gemisch verschiedener di- oder trifunktionaler Substanzen sein, die vorzugsweise jeweils monodispers sind.

Gemäß einer bevorzugten Ausführungsform der Erfindung weist der difunktionale Kettenverlängerer zwei funktionelle Gruppen auf, die mit Isocyanatgruppen reagieren können.

Als difunktionaler Kettenverlängerer kommen verschiedene Substanzen in Betracht. Vorteilhafterweise ist im erfindungsgemäßen thermochromen Polyurethanschaum der difunktionale Kettenverlängerer ein Diol mit der Formel HO-R-OH, wobei R eine (C1-C30)-Alkylenkette, insbesondere eine (C1-C16)-Alkylenkette bedeutet, die optional 1 bis 10 Heteroatome, insbesondere Sauerstoff, enthält.

Unter einer Alkylengruppe werden dabei insbesondere solche Gruppen verstanden, die durch die allgemeine Formel -CₙH₂ₙ- beschrieben werden, die also durch Abstraktion von zwei Wasserstoffatomen von dem entsprechenden Alkan erhalten werden. Insbesondere sind die Alkylengruppen gesättigt. Beispiele für Alkylengruppen sind Methylen (-CH₂-), Ethylen (-C₂H₄-), Propylen (-C₃H₆-). Die Alkylengruppen weisen insbesondere zwei freie Valenzen auf. Die Alkylengruppen können ferner unverzweigt oder verzweigt sein, bevorzugt sind sie unverzweigt. Sind Heteroatome in der Alkylengruppe vorhanden, so ersetzen diese insbesondere -CH₂- Einheiten im Inneren der Alkylengruppe. Beispiele für Alkylengruppen mit Heteroatomen sind -CH₂-CH₂-O-CH₂-CH₂-, -CH₂-CH₂-O-CH₂-CH₂-O-CH₂-CH₂- und -CH₂-CH₂-O-CH₂-CH₂-O-CH₂-CH₂-O-CH₂-CH₂-.

Gemäß einer Ausführungsform des erfindungsgemäßen thermochromen Polyurethanschaums ist der difunktionale Kettenverlängerer ausgewählt aus der Gruppe bestehend aus Ethylenglykol, Diethylenglykol, Triethylenglykol, Tetraethylenglykol, Pentaethylenglykol, Propylenglycol, Dipropylenglycol, 1,3-Propandiol, 1,3-Butandiol, 1,4-Butandiol, Neopentylglycol, 1,6-Hexandiol und Mischungen davon. Bevorzugt ist der difunktionale Kettenverlängerer ausgewählt aus der Gruppe bestehend aus Ethylenglykol, Diethylenglykol, Triethylenglykol, Tetraethylenglykol, Pentaethylenglykol und Mischungen davon. Besonders bevorzugt ist der difunktionale Kettenverlängerer Ethylenglykol. Praktische Versuche haben ergeben, dass mit derartigen Kettenverlängerern, insbesondere mit Ethylenglykol, thermochrome Polyurethanschäume mit besonders guten mechanischen Eigenschaften erzielt werden können. Außerdem konnten thermochrome Polyurethanschäume mit hohen Gehalten an thermochromem Farbmittel erhalten werden.

Vorteilhafterweise weist der trifunktionale Kettenverlängerer drei funktionelle Gruppen auf, die mit Isocyanatgruppen reagieren können.

Gemäß einer Ausführungsform der Erfindung ist der trifunktionale Kettenverlängerer ausgewählt aus der Gruppe bestehend aus Glycerin, Trimethylolpropan, 1,2,6-Hexantriol, Triethanolamin und Mischungen davon.

Der thermochrome Polyurethanschaum kann den mindestens einen di- oder trifunktionalen Kettenverlängerer in unterschiedlicher Menge enthalten. Vorteilhafterweise enthält der erfindungsgemäße thermochrome Polyurethanschaum 0,5 bis 5 Gew.%, bevorzugt 1 bis 4 Gew.%, jeweils bezogen auf das Gesamtgewicht des Polyurethanschaums, des mindestens einen di- oder trifunktionalen Kettenverlängerers. Thermochrome Polyurethanschäume mit diesen Gehalten an di- oder trifunktionalem Kettenverlängerer haben gute mechanische Eigenschaften, insbesondere gute Zugfestigkeiten, gezeigt und konnten einen hohen Gehalt an thermochromem Farbmittel aufnehmen.

Geeignete Polyesterpolyole zur Umsetzung zum erfindungsgemäßen thermochromen Polyurethanschaum können unverzweigt oder verzweigt sein, bevorzugt sind sie verzweigt. Beispiele für Polyesterpolyole sind Polykondensationsprodukte einer Dicarbonsäure wie Bernsteinsäure, Glutarsäure, Adipinsäure, Terephthalsäure oder Phthalsäure mit einer Polyhydroxylverbindung wie Diethylenglycol, Glycerin oder Trimethylolpropan oder Ringöffnungspolymerisationsprodukte von Lactonen wie epsilon-Caprolacton. Auch Copolyesterpolyole auf Basis von mehr als einer Dicarbonsäure und/oder mehr als einer Polyhydroxylverbindung sind denkbar.

Weiter bevorzugt weist das mindestens eine Polyesterpolyol eine Hydroxylzahl, gemessen nach DIN 53240-2, insbesondere nach DIN 53240-2:2007-11, im Bereich von 50 bis 250 mg KOH/g auf. Gemäß einer Ausführungsform weist das mindestens eine Polyesterpolyol des erfindungsgemäßen Polyurethanschaums eine Hydroxylzahl, gemessen nach DIN 53240-2, insbesondere nach DIN 53240-2:2007-11, im Bereich von 50 bis 70 mg KOH/g auf. Gemäß einer weiteren Ausführungsform weist das mindestens eine Polyesterpolyol des erfindungsgemäßen Polyurethanschaums eine Hydroxylzahl, gemessen nach DIN 53240-2, insbesondere nach DIN 53240-2:2007-11, im Bereich von 190 bis 240 mg KOH/g auf.

Weiterhin bevorzugt liegt das mindestens eine Polyesterpolyol zur Umsetzung zum thermochromen Polyurethanschaum bei 25°C in flüssiger, insbesondere in zähflüssiger, Form vor. Gemäß einer bevorzugten Ausführungsform der Erfindung weist das mindestens eine Polyesterpolyol des thermochromen Polyurethanschaums bei 25°C eine Viskosität von 10000 bis 25000 mPas, insbesondere von 15000 bis 23000 mPas, jeweils gemessen nach DIN EN ISO 3219/B, auf.

Der thermochrome Polyurethanschaum kann das mindestens eine Polyesterpolyol in unterschiedlichen Mengen enthalten. Bevorzugt enthält der erfindungsgemäße thermochrome Polyurethanschaum das mindestens eine Polyesterpolyol in einer Menge von 10 bis 75 Gew.%, bezogen auf das Gesamtgewicht des thermochromen Polyurethanschaums.

Gemäß einer Ausführungsform enthält der erfindungsgemäße thermochrome Polyurethanschaum 10 bis 17 Gew.%, insbesondere 12 bis 16 Gew.%, jeweils bezogen auf das Gesamtgewicht des thermochromen Polyurethanschaums, des mindestens einen Polyesterpolyols, sowie optional von 40 bis 80 Gew.%, bevorzugt von 50 bis 75 Gew.%, jeweils bezogen auf das Gesamtgewicht des thermochromen Polyurethanschaums, eines Prepolymers, insbesondere eines Polyesterpolyol basierenden isocyanatgruppenhaltigen Prepolymers.

Gemäß einer weiteren Ausführungsform enthält der erfindungsgemäße thermochrome Polyurethanschaum 50 bis 75 Gew.%, insbesondere 55 bis 70 Gew.%, jeweils bezogen auf das Gesamtgewicht des thermochromen Polyurethanschaums, des mindestens einen Polyesterpolyols. Auf diese Weise können die mechanischen Eigenschaften des erfindungsgemäßen thermochromen Polyurethanschaums eingestellt werden.

Verschiedene Verbindungen sind als isocyanatgruppenhaltige Verbindung, die zur Herstellung des erfindungsgemäßen thermochromen Polyurethanschaumes verwendet wird, geeignet. Die isocyanatgruppenhaltige Verbindung wird vorzugsweise in einer Menge von 5 bis 90 Gew%, bevorzugt von 10 bis 85 Gew.%, weiter bevorzugt von 15 bis 80 Gew.%, jeweils bezogen auf das Gesamtgewicht des thermochromen Polyurethanschaums, eingesetzt.

Gemäß einer bevorzugten Ausführungsform der Erfindung ist die mindestens eine isocyanatgruppenhaltige Verbindung ein auf einem Polyesterpolyol basierendes isocyanatgruppenhaltiges Prepolymer und ein Polyisocyanat.

Als auf einem Polyesterpolyol basierendes isocyanatgruppenhaltiges Prepolymer kann ein Polyesterpolyol, das durch Umsetzung eines wie oben beschriebenen Polyesterpolyols mit einer Verbindung mit mehr als einer Isocyanatgruppe erhalten wurde, verwendet werden. Beispielsweise kann ein auf einem Polyesterpolyol basierendes isocyanatgruppenhaltiges Prepolymer durch Reaktion eines Polyesterpolyols mit einer Hydroxylzahl von 60 mg KOH/g mit einem Polyisocyanat, wie zum Beispiel 2,4-Toluoldiisocyanat, 2,6-Toluoldiisocyanat und Mischungen davon, erhalten werden. Bevorzugt hat das auf einem Polyesterpolyol basierende isocyanatgruppenhaltige Prepolymer einen Isocyanatgruppen-Gehalt im Bereich von 5 bis 20%, insbesondere von 7 bis 15%. Der thermochrome Polyurethanschaum kann das Polyesterpolyol basierende isocyanatgruppenhaltige Prepolymer insbesondere in einer Menge von 40 bis 80 Gew.%, bevorzugt von 50 bis 75 Gew.%, jeweils bezogen auf das Gesamtgewicht des thermochromen Polyurethanschaums, enthalten.

Als Polyisocyanate werden vorzugsweise aliphatische oder aromatische Polyisocyanate mit mindestens zwei Isocyanatgruppen pro Molekül eingesetzt. Dabei zeigen aliphatische Polyisocyanate eine bessere Lichtbeständigkeit.

Gemäß einer bevorzugten Ausführungsform kann als isocyanatgruppenhaltige Verbindung ein Polyisocyanat, ausgewählt aus der Gruppe bestehend aus Ethylendiisocyanat, 1,4-Tetramethylendiisocyanat, 1,6-Hexamethylendiisocyanat, Cyclohexan-1,3-diisocyanat, Cyclohexan-1,4-diisocyanat und Mischungen dieser Isomere, 2,4-Toluoldiisocyanat, 2,6-Toluoldiisocyanat und Mischungen dieser Isomere, 2,2'-Methylendiphenylisocyanat, 2,4'-Methylendiphenylisocyanat, 4,4'-Methylendiphenylisocyanat, Naphthylen-1,5-diisocyanat, Triphenylmethan-4,4',4"-triisocyanat und Mischungen davon, eingesetzt werden. Besonders bevorzugt wird als Polyisocyanat ein Gemisch von 2,4-Toluoldiisocyanat und 2,6-Toluoldiisocyanat mit einem Gehalt an 2,4-Toluoldiisocyanat von 60-70 Gew.%, insbesondere von 66-68 Gew.%, jeweils bezogen auf das Gesamtgewicht des Gemischs der Toluoldiisocyanate, eingesetzt.

Das Polyisocyanat kann vorzugsweise in einer Menge von 10 bis 50 Gew.%, weiter bevorzugt von 15 bis 40 Gew.%, noch weiter bevorzugt von 15 bis 35 Gew.%, jeweils bezogen auf das Gesamtgewicht des thermochromen Polyurethanschaums, eingesetzt werden.

Werden als isocyanatgruppenhaltige Verbindung ein Prepolymer und ein Polyisocyanat eingesetzt, so wird das Prepolymer vorzugsweise in einer Menge von 50 bis 75 Gew.% und das Polyisocyanat vorzugsweise in einer Menge von 15 bis 20 Gew.%, jeweils bezogen auf das Gesamtgewicht des thermochromen Polyurethanschaums, eingesetzt.

Das mindestens eine thermochrome Farbmittel, in dessen Gegenwart die Umsetzung zur Herstellung des erfindungsgemäßen thermochromen Polyurethanschaums erfolgt, kann einen Farbstoff oder ein Pigment enthalten. Der Farbstoff oder das Pigment können anorganisch oder organisch sein. Dabei kann das thermochome Farbmittel mehrere Komponenten umfassen. Insbesondere kann das thermochrome Farbmittel eine Matrix, eine Hilfsverbindung und einen Farbstoff oder ein Pigment enthalten. Gemäß einer bevorzugten Ausführungsform der Erfindungs ist das mindestens eine thermochrome Farbmittel, bevorzugt enthaltend eine Matrix, eine Hilfsverbindung und einen Farbstoff oder ein Pigment, in einer Mikrokapsel eingeschlossen. Die Außenhülle der Mikrokapsel ist vorzugsweise transparent, um die Wahrnehmung eines Farbumschlags visuell zu ermöglichen. Die Einkapselung des thermochromen Farbmittels verbessert die Reversibilität des Farbumschlags.

Als Matrix wird bevorzugt ein Lösungsmittel eingesetzt, das unterhalb der Temperatur des Farbumschlags bevorzugt fest ist. Dieses Lösungsmittel ist bevorzugt ausgewählt aus Wachsen, niedrig schmelzenden thermoplastischen Harzen, Kautschuk, natürlichen Harzen und synthetischen Harzen. Beispiele dafür sind niedrig molekulargewichtige Polyethylene, niedrig schmelzende Polyester, Ethylenvinylacetatcopolymer, chlorierter Kautschuk, eine Polyvinylacetat-Emulsion, eine Polyethylen-Emulsion, eine Acryl-Emulsion, eine Styrolharz-Emulsion, eine Butadiennitril-Emulsion, Schelllack, Tein, ein ungesättigtes Polyesterharz, ein Epoxyharz, ein Zelluloseharz, ein Polyurethanharz, ein Phenolharz, ein Vinylchloridharz, ein Vinylacetatharz, ein Silikonharz, Polyvinylalkohol, Polyvinylmethylether und Mischungen davon. Insbesondere bevorzugt ist, dass das feste Lösungsmittel einen Schmelzpunkt im Bereich von -5 bis 100 °C, insbesondere von 0 °C bis 90 °C oder von 10 °C bis 80 °C oder von 20 °C bis 60 °C oder von 30 °C bis 50 °C, aufweist. Dabei zeichnet sich ein Farbstoff des thermochromen Farbmittels insbesondere dadurch aus, dass er bezüglich der Matrix löslich ist.

In einer Ausführungsform der Erfindung ist es ferner bevorzugt, dass das feste Lösungsmittel einen Siedepunkt von weniger als 150 °C aufweist. Ferner ist bevorzugt, dass das feste Lösungsmittel einen Siedepunkt von mehr als 90 °C oder mehr als 100 °C aufweist.

Durch das Aufschmelzen des Lösungsmittels bei etwa der Temperatur des Farbumschlags können der Farbstoff oder das Pigment mit der Hilfsverbindung derart interagieren, dass das thermochrome Farbmittel einen reversiblen Farbumschlag erfährt. Dabei ist gemäß einer Ausführungsform die Hilfsverbindung in der Lage, bei Kontakt mit dem Farbstoff oder dem Pigment in der geschmolzenen Matrix einen Farbumschlag des thermochromen Farbmittels von farbig nach farblos herbeizuführen. Als Hilfsverbindung können hier beispielsweise Verbindungen wie organische Säuren, zum Beispiel Carbonsäuren, Phenole und Phenolderivate, 5-Hydroxybenzotriazole, Tetrazole oder Triazole wie 1,2,3-Triazol verwendet werden.

Gemäß einer weiteren Ausführungsform wird der Farbeindruck des thermochromen Farbmittels durch Kontakt der Hilfsverbindung mit dem Farbstoff oder dem Pigment erzeugt. Dabei wird der Farbumschlag von farbig nach farblos in der geschmolzenen Matrix dadurch erzeugt, dass die Hilfsverbindung den Kontakt zum Farbstoff oder dem Pigment verliert.

Dementsprechend weist der erfindungsgemäße thermochrome Polyurethanschaum gemäß einer bevorzugten Ausführungsform bei einer Temperatur von -5 °C bis 100 °C, insbesondere von 0 °C bis 90 °C oder von 10 °C bis 80 °C oder von 20 °C bis 60 °C oder von 30 °C bis 50 °C, einen Farbumschlag von farbig nach farblos oder von einer ersten Farbe zu einer zweiten Farbe auf. Die Farbumschlagspunkte können dabei sehr genau eingestellt werden, vorzugsweise in Abstufungen von 3 +/- 2 °C bis 5 +/- 2 °C. Beispielsweise kann der thermochrome Polyurethanschaum zu Beginn blau sein und bei Erreichen der Farbumschlagstemperatur nach farblos wechseln. Denkbar ist es ferner, dass durch Zusatz eines weiteren Farbstoffs, beispielsweise in Form einer Tinte, bei der Herstellung des thermochromen Polyurethanschaumes zusätzlich zu dem mindestens einen thermochromen Farbmittel, ein thermochromer Polyurethanschaum mit einem Farbwechsel von einer ersten Farbe zu einer zweiten Farbe, beispielsweise von blau nach rot, erzielt werden kann. Der zugesetzte weitere Farbstoff kann aber auch ein weiterer thermochromer Farbstoff sein. Dadurch können mehrere temperaturabhängige Farbumschläge realisiert werden.

Gemäß einer bevorzugten Ausführungsform der Erfindung wird das mindestens eine thermochrome Farbmittel als Gemisch mit dem mindestens einen di- oder trifunktionalen Kettenverlängerer zugegeben. Dadurch lässt sich zum einen ein hoher Gehalt an thermochromem Farbmittel in dem thermochromen Polyurethanschaum erzielen. Ferner kann das Herstellungsverfahren auf diese Weise sehr wirtschaftlich durchgeführt werden.

Das thermochrome Farbmittel kann in dem erfindungsgemäßen thermochromen Polyurethanschaum in einer Menge von 0,01 bis 10 Gew.%, bevorzugt von 0,1 bis 5 Gew.%, weiter bevorzugt von 0,2 bis 3 Gew.%, jeweils bezogen auf das Gesamtgewicht des thermochromen Polyurethanschaums, enthalten sein.

Gemäß einer weiteren Ausführungsform der Erfindung wird die Umsetzung zur Herstellung des thermochromen Polyurethanschaums in Gegenwart einer Fettsäure durchgeführt. Dadurch können Polyurethanschäume mit einer anisotropen Zellstruktur erhalten werden. Diese ist besonders vorteilhaft, wenn eine Naturschwammoptik des erfindungsgemäßen thermochromen Polyurethanschaums erwünscht ist, beispielsweise bei Schwammporen, zum Beispiel für Badeschwämme.

Der erfindungsgemäße thermochrome Polyurethanschaum kann offenzellig, geschlossenzellig oder gemischtzellig, insbesondere teilweise geschlossenzellig, sein. Bei geschlossenzelligen Polyurethanschäumen sind die Wände zwischen den einzelnen Zellen komplett geschlossen. Dies ist für den Fachmann beispielsweise dadurch erkennbar, dass Gase nicht oder nur sehr schwer durch den Polyurethanschaum hindurchgelangen. Bei offenzelligen Polyurethanschäumen sind die Wände zwischen den einzelnen Zellen nicht geschlossen. Dies ist für den Fachmann beispielsweise daran zu erkennen, dass Gase leicht durch den Polyurethanschaum hindurchgelangen. Ferner können diese Polyurethanschäume auch Flüssigkeiten aufnehmen. Gemischtzellige, insbesondere teilweise geschlossenzellige, Polyurethanschäume enthalten sowohl geschlossene Zellen als auch offene Zellen.

Gemäß einer Ausführungsform der Erfindung ist der thermochrome Polyurethanschaum zu 80 bis 90% geschlossenzellig. Dies ist insbesondere der Fall für frisch hergestellte, erfindungsgemäße thermochrome Polyurethanschäume. Gemäß einer weiteren Ausführungsform der Erfindung ist der thermochrome Polyurethanschaum offenzellig. Methoden zur Herstellung des offenzelligen, thermochromen Polyurethanschaums, insbesondere ausgehend von dem zu 80 bis 90% geschlossenzelligen thermochromen Polyurethanschaum, sind dem Fachmann bekannt. Beispielsweise kann die Offenzelligkeit des thermochromen Polyurethanschaums durch Retikulieren erreicht werden. Dabei kann der thermochrome Polyurethanschaum insbesondere in einem Autoklav in Gegenwart eines Gases enthaltend ein Knallgasgemisch aus Wasserstoff und Sauerstoff im Molverhältnis von im Wesentlichen 2:1 einer Explosion des Knallgasgemisches ausgesetzt werden. Dadurch können die mechanischen Eigenschaften des thermochromen Polyurethanschaumes weiter verbessert werden.

Ferner kann die Umsetzung zur Herstellung des thermochromen Polyurethanschaumes bei Bedarf auch in Gegenwart weiterer Substanzen durchgeführt werden. Beispielsweise können Katalysatoren wie Zinndi-2-ethylhexanoat, Dibutylzinndilaurat und Dibutylzinndi-2-ethylhexanoat bei der Umsetzung verwendet werden. Weiterhin können auch Cokatalysatoren, beispielsweise Aminkatalysatoren wie Triethylendiamin, N-Methylmorpholin, Tetramethyl-1,4-butandiamin, N-Methylpiperazin, Dimethylpiperazin, Dimethylethanolamin, Triethylamin und Mischungen davon, verwendet werden. Ferner können Stabilisatoren, Emulgatoren, Tenside, insbesondere Organosiloxanverbindungen, und/oder Flammschutzmittel hinzugefügt werden. Die Katalysatoren, Cokatalysatoren, Stabilisatoren, Emulgatoren und Tenside können jeweils in einer Menge von 0,005 bis 10 Gewichtsteile, bevorzugt 0,01 bis 5 Gewichtsteile, jeweils bezogen auf 100 Gewichtsteile des mindestens einen Polyesterpolyols, eingesetzt werden.

Ferner stellt die Erfindung Verfahren zur Herstellung des erfindungsgemäßen thermochromen Polymerschaums zur Verfügung. Demgemäß umfasst das Verfahren zur Herstellung des thermochromen Polyurethanschaums
a. Bereitstellen mindestens eines Polyesterpolyols,
b. Bereitstellen mindestens eines thermochromen Farbmittels,
c. Bereitstellen mindestens einer isocyanatgruppenhaltigen Verbindung, wobei die mindestens eine isocyanatgruppenhaltige Verbindung ein auf einem Polyesterpolyol basierendes isocyanatgruppenhaltiges Prepolymer ist,
d. Bereitstellen mindestens eines di- oder trifunktionalen Kettenverlängerers,
e. Vermischen und Schäumen der Komponenten a., b., c. und d. unter Bildung eines thermochromen Polyurethanschaums.

Die Schritte a. bis e. des erfindungsgemäßen Verfahrens können in beliebiger Reihenfolge durchgeführt werden, vorzugsweise werden sie in der oben angeführten Reihenfolge durchgeführt.

Das voranstehend im Zusammenhang mit dem thermochromen Polyurethanschaum zu dem difunktionalen Kettenverlängerer Gesagte gilt gleichermaßen auch für den difunktionalen Kettenverlängerer des erfindungsgemäßen Verfahrens.

Das voranstehend im Zusammenhang mit dem thermochromen Polyurethanschaum zu dem trifunktionalen Kettenverlängerer Gesagte gilt gleichermaßen auch für den trifunktionalen Kettenverlängerer des erfindungsgemäßen Verfahrens.

Gemäß einer bevorzugten Ausführungsform des erfindungsgemäßen Verfahrens wird der mindestens eine di- oder trifunktionale Kettenverlängerer zusammen mit dem mindestens einen thermochromen Farbmittel bereitgestellt. Dadurch kann das Verfahren zum einen sehr wirtschaftlich durchgeführt werden, zum anderen erlaubt es die Herstellung von thermochromen Polyurethanschäumen mit einem hohen Gehalt an thermochromem Farbmittel und mit guten mechanischen Eigenschaften.

Das voranstehend im Zusammenhang mit dem thermochromen Polyurethanschaum zu dem mindestens einen Polyesterpolyol Gesagte gilt gleichermaßen auch für das mindestens eine Polyesterpolyol des erfindungsgemäßen Verfahrens.

Ebenso gilt das voranstehend im Zusammenhang mit dem thermochromen Polyurethanschaum zu dem mindestens einen thermochromen Farbmittel Gesagte gleichermaßen auch für das mindestens eine thermochrome Farbmittel des erfindungsgemäßen Verfahrens.

Ferner gilt das voranstehend im Zusammenhang mit dem thermochromen Polyurethanschaum zu der mindestens einen isocyanatgruppenhaltigen Verbindung Gesagte gleichermaßen auch für die mindestens eine isocyanatgruppenhaltige Verbindung des erfindungsgemäßen Verfahrens.

Der mit dem erfindungsgemäßen Verfahren hergestellte thermochrome Polyurethanschaum weist vorzugsweise bei einer Temperatur von -5 °C bis 100 °C, insbesondere von 0 °C bis 90 °C oder von 10 °C bis 80 °C oder von 20 °C bis 60 °C oder von 30 °C bis 50 °C, einen Farbumschlag von farbig nach farblos oder von einer ersten Farbe zu einer zweiten Farbe auf.

Gemäß einer weiteren Ausführungsform des erfindungsgemäßen Verfahrens wird Schritt e. in Gegenwart einer Fettsäure durchgeführt.

Der erfindungsgemäße thermochrome Polyurethanschaum eignet sich für eine Vielzahl an möglichen Verwendungen. Insbesondere bezieht sich die vorliegende Erfindung auf die Verwendung des erfindungsgemäßen thermochromen Polyurethanschaums für eine Polierscheibe und/oder für eine Schwammpore und/oder für Isoliermaterial, insbesondere für chemische Reaktoren.

Ferner bezieht sich die vorliegende Erfindung auf eine Polierscheibe enthaltend einen erfindungsgemäßen thermochromen Polyurethanschaum.

Weiterhin bezieht sich die vorliegende Erfindung auf eine Schwammpore enthaltend einen erfindungsgemäßen thermochromen Polyurethanschaum.

Außerdem bezieht sich die vorliegende Erfindung auf ein Isoliermaterial, insbesondere für chemische Reaktoren, enthaltend einen erfindungsgemäßen thermochromen Polyurethanschaum.

Das Prinzip der Erfindung soll im Folgenden an Beispielen näher erläutert werden, die der Illustrierung dienen und nicht als einschränkend auszulegen sind.

### BEISPIELE

### Materialien

Polyol 1 (verzweigtes Polyesterpolyol mit einer OH-Zahl von 210); Polyol 2 (verzweigtes Polyesterpolyol mit einer OH-Zahl von 60); Polyol 3 (polyesterpolyolbasierendes Prepolymer mit einem Gehalt an Isocyanatgruppen von 11,5%); IE (ionischer Emulgator); SIT (Silikontensid); Amin 1 (Tertiäres Amin); Kat (Zinncarbonsäuresalz); TDI65 (Mischung von 2,4- und 2,6-Toluoldiisocyanat); TF1 (Thermochromer Farbstoff, 25 Gew.% in Ethan-1,2-diol); TF2 (Thermochromer Farbstoff, 25 Gew.% in Ethan-1,2-diol); TF3 (Thermochromer Farbstoff, 25 Gew.% in Ethan-1,2-diol); Amin 2 (30%ige Lösung eines tertiären Amins in Dipropylenglycol); Amin 3 (30%ige Lösung einer 1:1 Mischung zweier tertiärer Amine in Dipropylenglycol); SA 10% (Stearinsäure 10% in Ethan-1,2-diol); Tinte (Polyesterpolyol-Tinte rot).

### Rezepturen

Folgende in Tabellen 1 und 2 wiedergegebene Rezepturen A bis I enthaltend ein Polyesterpolyol wurden hergestellt, dosierte Angaben jeweils in Gew.%.

**Tabelle 1**

| | Rezepturen | | | |
|---|---|---|---|---|
| **Bestandteil** | **A** | **B** | **C** | **D** |
| Polyol 1 | 85,52 | - | - | - |
| Polyol 2 | - | 85,63 | 82,51 | 82,85 |
| IE | 3,49 | 3,06 | 1,24 | 1,24 |
| SIT | 3,84 | 3,67 | 3,14 | 3,15 |
| Amin 1 | 1,9 | - | - | - |
| Amin 2 | - | 1,59 | - | - |
| Kat | 0,05 | 0,06 | - | - |
| Amin 3 | - | - | 1,16 | 1,16 |
| TF1 | - | - | 6,19 | 6,21 |
| SA 10% | - | - | 2,06 | 1,66 |
| Wasser | 5,20 | 5,99 | 3,7 | 3,73 |

**Tabelle 2**

| | Rezepturen | | | | |
|---|---|---|---|---|---|
| **Bestandteil** | **E** | **F** | **G** | **H** | **I** |
| Polyol 1 | - | - | - | - | - |
| Polyol 2 | 84,25 | 84,96 | 86,06 | 82,85 | 84,25 |
| IE | 1,26 | 1,27 | 1,29 | 1,24 | 1,26 |
| SIT | 3,2 | 3,23 | 3,27 | 3,15 | 3,2 |
| Amin 1 | - | - | - | - | - |
| Amin 2 | - | - | - | - | - |
| Kat | - | - | - | - | - |
| Amin 3 | 1,18 | 1,19 | 1,20 | 1,16 | 1,18 |
| TF1 | 4,21 | 3,4 | - | - | - |
| TF2 | - | - | - | 6,21 | 4,21 |
| TF3 | - | - | 2,58 | - | - |
| SA 10% | 2,11 | 2,12 | 1,72 | 1,66 | 2,11 |
| Wasser | 3,79 | 3,83 | 3,88 | 3,73 | 3,79 |

Die erhaltenen Rezepturen A bis I wurden anschließend mit einem Polyisocyanat, Tinte und gegebenenfalls einem thermochromen Farbmittel über einen Mischkopf zu den Schäumen A-S bis I-S mit den in den Tabellen 3 und 4 angegebenen Schaumzusammensetzungen weiterverarbeitet, dosierte Angaben jeweils als Gewichtsteile. Die Schaumzusammensetzungen wurden nach der angegebenen Startzeit mit der angegebenen Reaktionszeit zu Blockschäumen mit einer Länge von 5 bis 7 m geschäumt. Tabellen 3 und 4 enthalten ebenfalls Informationen zum Farbwechsel der Schäume sowie Kennwerte der mechanischen Eigenschaften der Schäume.

**Tabelle 3**

| | Schäume | | | |
|---|---|---|---|---|
| **Bestandteil** | **A-S** | **B-S** | **C-S*** | **D-S*** |
| Rezeptur A | 77 | - | - | - |
| Rezeptur B | - | 77 | - | - |
| Rezeptur C | - | - | 121,2 | - |
| Rezeptur D | - | - | - | 120,7 |
| TF1 | 19,3 | 19,3 | - | - |
| Polyol 3 | 277 | 277 | - | - |
| TDI65 | 76,92 | 76,92 | 52,3 | 52,3 |
| Tinte | 0,2 | 0,2 | 0,5 | 0,05 |
| Startzeit [s] | 35 | 32 | 18 | 25 |
| Reaktionszeit [s] | 156 | 145 | 105 | 92 |
| Farbumschlag (Temperatur) | Blau nach rot (40 °C) | Blau nach gelb (40 °C) | Blau nach rot (40 °C) | Blau nach rot (40 °C) |
| Dichte [kg/m³] nach ISO 845 | 45,1 | 45,2 | 31,4 | 31,1 |
| Zugfestigkeit [kPa] nach ISO 1798 | 340 | 343 | 268 | 263 |
| Stauchhärte CLD, 40% [kPa] nach ISO 3386 | 9,61 | 9,67 | 4,41 | 4,23 |

| | | | | |
|---|---|---|---|---|
| *Vergleichsbeispiel | | | | |

**Tabelle 4**

| | Schäume | | | | |
|---|---|---|---|---|---|
| **Bestandteil** | **E-S*** | **F-S*** | **G-S*** | **H-S*** | **I-S*** |
| Rezeptur E | 118,7 | - | - | - | - |
| Rezeptur F | - | 117,7 | - | - | - |
| Rezeptur G | - | - | 116,2 | - | - |
| Rezeptur H | - | - | - | 120,7 | - |
| Rezeptur I | - | - | - | - | 118,7 |
| TDI65 | 35 | 40 | 35 | 45 | 35 |
| Tinte | 1 | 1 | 0,5 | 0,1 | 1 |
| Startzeit [s] | 35 | 28 | 28 | 30 | 35 |
| Reaktionszeit [s] | 90 | 93 | 88 | 100 | 90 |
| Farbumschlag (Temperatur) | Grün nach gelb (40 °C) | Orange nach gelb (40 °C) | Orange nach gelb (35°C) | Grau nach rot (45 °C) | Grün nach gelb (45°C) |
| Dichte [kg/m³] nach ISO 845 | 29,3 | 29,8 | 28,3 | 29,1 | 28,6 |
| Zugfestigkeit [kPa] nach ISO 1798 | 253 | 245 | 237 | 249 | 241 |
| Stauchhärte CLD, 40% [kPa] nach ISO 3386 | 4,01 | 3,95 | 3,79 | 3,99 | 3,86 |

| | | | | | |
|---|---|---|---|---|---|
| *Vergleichsbeispiel | | | | | |

Aus den Tabellen 3 und 4 ist ersichtlich, dass mit der vorliegenden Erfindung thermochrome Polyurethanschäume erhalten werden, bei denen Ausgangsfarbe sowie die Zielfarbe und die Umschlagtemperatur des Farbwechsels einstellbar sind. Zudem weisen die erfindungsgemäßen Schäume gute mechanische Eigenschaften, insbesondere eine Zugfestigkeit von über 200 kPa, auf.

## Patentansprüche

1. Thermochromer Polyurethanschaum hergestellt durch Umsetzung mindestens eines Polyesterpolyols mit mindestens einer isocyanatgruppenhaltigen Verbindung in Gegenwart mindestens eines thermochromen Farbmittels, **dadurch gekennzeichnet, dass** die Umsetzung in Gegenwart mindestens eines di- oder trifunktionalen Kettenverlängerers erfolgt und die mindestens eine isocyanatgruppenhaltige Verbindung ein auf einem Polyesterpolyol basierendes isocyanatgruppenhaltiges Prepolymer ist.

2. Thermochromer Polyurethanschaum nach Anspruch 1, **dadurch gekennzeichnet, dass** der difunktionale Kettenverlängerer zwei funktionelle Gruppen aufweist, die mit Isocyanatgruppen reagieren können und/oder der difunktionale Kettenverlängerer ein Diol mit der Formel HO-R-OH ist, wobei R eine (C1-C30)-Alkylenkette, insbesondere eine (C1-C16)-Alkylenkette bedeutet, die optional 1 bis 10 Heteroatome, insbesondere Sauerstoff, enthält und/oder der difunktionale Kettenverlängerer ausgewählt ist aus der Gruppe bestehend aus Ethylenglykol, Diethylenglykol, Triethylenglykol, Tetraethylenglykol, Pentaethylenglykol, Propylenglycol, Dipropylenglycol, 1,3-Propandiol, 1,3-Butandiol, 1,4-Butandiol, Neopentylglycol, 1,6-Hexandiol und Mischungen davon.

3. Thermochromer Polyurethanschaum nach einem der vorstehenden Ansprüche, **dadurch gekennzeichnet, dass** der difunktionale Kettenverlängerer Ethylenglykol ist.

4. Thermochromer Polyurethanschaum nach Anspruch 1, **dadurch gekennzeichnet, dass** der trifunktionale Kettenverlängerer drei funktionelle Gruppen aufweist, die mit Isocyanatgruppen reagieren können.

5. Thermochromer Polyurethanschaum nach Anspruch 1 oder 4, **dadurch gekennzeichnet, dass** der trifunktionale Kettenverlängerer ausgewählt ist aus der Gruppe bestehend aus Glycerin, Trimethylolpropan, 1,2,6-Hexantriol, Triethanolamin und Mischungen davon.

6. Thermochromer Polyurethanschaum nach einem der vorstehenden Ansprüche, **dadurch gekennzeichnet, dass** der thermochrome Polyurethanschaum 0,5 bis 5 Gew.%, bezogen auf das Gesamtgewicht des Polyurethanschaums, des mindestens einen di- oder trifunktionalen Kettenverlängerers enthält und/oder das mindestens eine Polyesterpolyol bei 25°C eine Viskosität von 10000 bis 25000 mPas, insbesondere von 15000 bis 23000 mPas, jeweils gemessen nach DIN EN ISO 3219/B, aufweist und/oder der thermochrome Polyurethanschaum 10 bis 75 Gew.%, bezogen auf das Gesamtgewicht des thermochromen Polyurethanschaums, des mindestens einen Polyesterpolyols enthält.

7. Thermochromer Polyurethanschaum nach einem der vorstehenden Ansprüche, **dadurch gekennzeichnet, dass** die mindestens eine isocyanatgruppenhaltige Verbindung ein auf einem Polyesterpolyol basierendes isocyanatgruppenhaltiges Prepolymer und ein Polyisocyanat ist.

8. Thermochromer Polyurethanschaum nach Anspruch 7, **dadurch gekennzeichnet, dass** das Polyisocyanat ausgewählt ist aus der Gruppe bestehend aus Ethylendiisocyanat, 1,4-Tetramethylendiisocyanat, 1,6-Hexamethylendiisocyanat, Cyclohexan-1,3-diisocyanat, Cyclohexan-1,4-diisocyanat und Mischungen dieser Isomere, 2,4-Toluoldiisocyanat, 2,6-Toluoldiisocyanat und Mischungen dieser Isomere, 2,2'-Methylendiphenylisocyanat, 2,4'-Methylendiphenylisocyanat, 4,4'-Methylendiphenylisocyanat, Naphthylen-1,5-diisocyanat, Triphenylmethan-4,4',4"-triisocyanat und Mischungen davon, und/oder das Polyisocyanat ein Gemisch von 2,4-Toluoldiisocyanat und 2,6-Toluoldiisocyanat mit einem Gehalt an 2,4-Toluoldiisocyanat von 60-70 Gew.%, insbesondere von 66-68 Gew.%, ist, jeweils bezogen auf das Gesamtgewicht des Gemischs der Toluoldiisocyanate.

9. Thermochromer Polyurethanschaum nach einem der vorstehenden Ansprüche, **dadurch gekennzeichnet, dass** das mindestens eine thermochrome Farbmittel in einer Mikrokapsel eingeschlossen ist und/oder das mindestens eine thermochrome Farbmittel als Gemisch mit dem mindestens einen di- oder trifunktionalen Kettenverlängerer zugegeben wird und/oder das mindestens eine thermochrome Farbmittel als Gemisch mit dem mindestens einen di- oder trifunktionalen Kettenverlängerer zugegeben wird und/oder der thermochrome Polyurethanschaum bei einer Temperatur von -5 °C bis 100 °C, insbesondere von 0 °C bis 90 °C oder von 10 °C bis 80 °C oder von 20 °C bis 60 °C oder von 30 °C bis 50 °C, einen Farbumschlag von farbig nach farblos oder von einer ersten Farbe zu einer zweiten Farbe aufweist und/oder die Umsetzung zur Herstellung des thermochromen Polyurethanschaums in Gegenwart einer Fettsäure durchgeführt wird.

10. Verfahren zur Herstellung eines thermochromen Polyurethanschaums gemäß einem der Ansprüche 1 bis 9, umfassend:
a. Bereitstellen mindestens eines Polyesterpolyols,
b. Bereitstellen mindestens eines thermochromen Farbmittels,
c. Bereitstellen mindestens einer isocyanatgruppenhaltigen Verbindung, wobei die mindestens eine isocyanatgruppenhaltige Verbindung ein auf einem Polyesterpolyol basierendes isocyanatgruppenhaltiges Prepolymer ist,
d. Bereitstellen mindestens eines di- oder trifunktionalen Kettenverlängerers,
e. Vermischen und Schäumen der Komponenten a., b., c. und d. unter Bildung eines thermochromen Polyurethanschaums.

11. Verfahren nach Anspruch 10, **dadurch gekennzeichnet, dass** der difunktionale Kettenverlängerer durch mindestens ein Merkmal der Ansprüche 2 bis 3 charakterisiert ist und/oder der trifunktionale Kettenverlängerer durch mindestens ein Merkmal der Ansprüche 4 oder 5 charakterisiert ist und/oder der mindestens eine di- oder trifunktionale Kettenverlängerer zusammen mit dem mindestens einen thermochromen Farbmittel bereitgestellt wird und/oder das mindestens eine Polyesterpolyol bei 25°C eine Viskosität von 10000 bis 25000 mPas, insbesondere von 15000 bis 23000 mPas, jeweils gemessen nach DIN EN ISO 3219/B, aufweist und/oder dass das mindestens eine thermochrome Farbmittel in einer Mikrokapsel eingeschlossen ist und/oder dass der thermochrome Polyurethanschaum bei einer Temperatur von -5 °C bis 100 °C, insbesondere von 0 °C bis 90 °C oder von 10 °C bis 80 °C oder von 20 °C bis 60 °C oder von 30 °C bis 50 °C, einen Farbumschlag von farbig nach farblos oder von einer ersten Farbe zu einer zweiten Farbe aufweist und/oder dass Schritt e. in Gegenwart einer Fettsäure durchgeführt wird.

12. Verwendung eines thermochromen Polyurethanschaums gemäß einem der Ansprüche 1 bis 9 für eine Polierscheibe und/oder für eine Schwammpore und/oder für Isoliermaterial, insbesondere für chemische Reaktoren.

13. Polierscheibe enthaltend einen thermochromen Polyurethanschaum gemäß einem der Ansprüche 1 bis 9.

14. Schwammpore enthaltend einen thermochromen Polyurethanschaum gemäß einem der Ansprüche 1 bis 9.

15. Isoliermaterial, insbesondere für chemische Reaktoren, enthaltend einen thermochromen Polyurethanschaum gemäß einem der Ansprüche 1 bis 9.

## Claims

1. Thermochromic polyurethane foam produced by means of conversion of at least one polyester polyol with at least one isocyanate-group-containing compound in the presence of at least one thermochromic colouring agent, **characterised in that** the conversion is carried out in the presence of at least one di- or tri-functional chain extender and the at least one isocyanate-group-containing compound is an isocyanate-group-containing prepolymer based on a polyester polyol.

2. Thermochromic polyurethane foam according to claim 1, **characterised in that** the di-functional chain extender has two functional groups which can react with isocyanate groups and/or the di-functional chain extender is a diol having the formula HO-R-OH, wherein R is a (C1-C30) alkylene chain, in particular a (C1-C16) alkylene chain which optionally contains from 1 to 10 heteroatoms, in particular oxygen, and/or the di-functional chain extender is selected from the group consisting of ethylene glycol, diethylene glycol, triethylene glycol, tetraethylene glycol, pentaethylene glycol, propylene glycol, dipropylene glycol, 1,3-propanediol, 1,3-butanediol, 1,4-butanediol, neopentyl glycol, 1,6-hexanediol and mixtures thereof.

3. Thermochromic polyurethane foam according to any one of the preceding claims, **characterised in that** the di-functional chain extender is ethylene glycol.

4. Thermochromic polyurethane foam according to claim 1, **characterised in that** the tri-functional chain extender has three functional groups which can react with isocyanate groups.

5. Thermochromic polyurethane foam according to claim 1 or claim 4, **characterised in that** the tri-functional chain extender is selected from the group consisting of glycerol, trimethylolpropane, 1,2,6-hexanetriol, triethanolamine and mixtures thereof.

6. Thermochromic polyurethane foam according to any one of the preceding claims, **characterised in that** the thermochromic polyurethane foam contains from 0.5 to 5% by weight with respect to the overall weight of the polyurethane foam, of the at least one di- or tri-functional chain extender and/or the at least one polyester polyol at 25°C has a viscosity of 10000 to 25000 mPas, in particular from 15000 to 23000 mPas, measured in each case according to DIN EN ISO 3219/B and/or the thermochromic polyurethane foam contains from 10 to 75% by weight, with respect to the overall weight of the thermochromic polyurethane foam, of the at least one polyester polyol.

7. Thermochromic polyurethane foam according to any one of the preceding claims, **characterised in that** the at least one isocyanate-group-containing compound is an isocyanate-group-containing prepolymer based on a polyester polyol and a polyisocyanate.

8. Thermochromic polyurethane foam according to claim 7, **characterised in that** the polyisocyanate is selected from the group consisting of ethylene diisocyanate, 1,4 tetramethylene diisocyanate, 1,6-hexamethylene diisocyanate, cyclohexane-1,3-diisocyanate, cyclohexane-1,4-diisocyanate and mixtures of these isomers, 2,4-toluene diisocyanate, 2,6-toluene diisocyanate and mixtures of these isomers, 2-2'-methylene diphenyl isocyanate, 2-4'-methylene diphenyl isocyanate, 4-4'-methylene diphenyl isocyanate, naphthylene-1,5-diisocyanate, triphenylmethane-4,4',4"-triisocyanate and mixtures thereof, and/or the polyisocyanate is a mixture of 2,4-toluene diisocyanate and 2,6-toluene diisocyanate with a content of 2,4-toluene diisocyanate of from 60 to 70% by weight, in particular from 66 to 68 % by weight, in each case with respect to the overall weight of the mixture of toluene diisocyanates.

9. Thermochromic polyurethane foam according to any one of the preceding claims, **characterised in that** the at least one thermochromic colouring agent is enclosed in a microcapsule and/or the at least one thermochromic colouring agent is added as a mixture with the at least one di- or tri-functional chain extender and/or the at least one thermochromic colouring agent is added as a mixture with the at least one di- or tri-functional chain extender and/or the thermochromic polyurethane foam at a temperature of from -5°C to 100°C, in particular from 0°C to 90°C or from 10°C to 80°C or from 20°C to 60°C or from 30°C to 50°C, has a colour change from coloured to colourless or from a first colour to a second colour and/or the conversion to produce the thermochromic polyurethane foam is carried out in the presence of a fatty acid.

10. Method for producing a thermochromic polyurethane foam according to any one of claims 1 to 9, comprising:
a. providing at least one polyester polyol,
b. providing at least one thermochromic colouring agent,
c. providing at least one isocyanate-group-containing compound, wherein the at least one isocyanate-group-containing compound is an isocyanate-group-containing prepolymer based on a polyester polyol,
d. providing at least one di- or tri-functional chain extender,
e. mixing and foaming the components a., b., c. and d. with a thermochromic polyurethane foam being formed.

11. Method according to claim 10, **characterised in that** the di-functional chain extender is **characterised by** at least one feature of claims 2 to 3, and/or the tri-functional chain extender is **characterised by** at least one feature of the claims 4 or 5, and/or the at least one di- or tri-functional chain extender is provided together with the at least one thermochromic colouring agent and/or the at least one polyester polyol at 25°C has a viscosity of from 10000 to 25000 mPas, in particular from 15000 to 23000 mPas, in each case measured according to DIN EN ISO 3219/B, and/or in that the at least one thermochromic colouring agent is enclosed in a microcapsule and/or in that the thermochromic polyurethane foam at a temperature of from -5°C to 100°C, in particular from 0°C to 90°C or from 10°C to 80°C or from 20°C to 60°C or from 30°C to 50°C, has a colour change from coloured to colourless or from a first colour to a second colour and/or in that step e. is carried out in the presence of a fatty acid.

12. Use of a thermochromic polyurethane foam according to any one of claims 1 to 9 for a polishing disc and/or for a sponge and/or for insulation material, in particular for chemical reactors.

13. Polishing disc containing a thermochromic polyurethane foam according to any one of claims 1 to 9.

14. Sponge containing a thermochromic polyurethane foam according to any one of claims 1 to 9.

15. Insulation material, in particular for chemical reactors, containing a thermochromic polyurethane foam according to any one of claims 1 to 9.

## Revendications

1. Mousse de polyuréthane thermochrome que l'on obtient par mise en réaction d'au moins un polyesterpolyol avec au moins un composé contenant des groupes isocyanate en présence d'au moins un colorant thermochrome, **caractérisée en ce que** la mise en réaction a lieu en présence d'au moins un agent d'allongement de chaîne bifonctionnel ou trifonctionnel et ledit au moins un composé contenant des groupes isocyanate représente un prépolymère contenant des groupes isocyanate à base d'un polyesterpolyol.

2. Mousse de polyuréthane thermochrome selon la revendication 1, **caractérisée en ce que** l'agent d'allongement de chaîne bifonctionnel présente deux groupes fonctionnels qui peuvent réagir avec des groupes isocyanate et/ou l'agent d'allongement de chaîne bifonctionnel représente un diol répondant à la formule HO-R-OH dans laquelle R représente une chaîne alkylène en C₁-C₃₀, en particulier une chaîne alkylène en C₁-C₁₆, qui contient de manière facultative de 1 à 10 hétéroatomes, en particulier de l'oxygène, et/ou l'agent d'allongement de chaîne bifonctionnel est choisi parmi le groupe constitué par l'éthylèneglycol, le diéthylèneglycol, le triéthylèneglycol, le tétraéthylèneglycol, le pentaéthylèneglycol, le propylèneglycol, le dipropylèneglycol, le 1,3-propanediol, le 1,3-butanediol, le 1,4-butanediol, le néopentylglycol, le 1,6-hexanediol, ainsi que leurs mélanges.

3. Mousse de polyuréthane thermochrome selon l'une quelconque des revendications précédentes, **caractérisée en ce que** l'agent d'allongement de chaîne bifonctionnel représente de l'éthylèneglycol.

4. Mousse de polyuréthane thermochrome selon la revendication 1, **caractérisée en ce que** l'agent d'allongement de chaîne trifonctionnel présente trois groupes fonctionnels qui peuvent réagir avec des groupes isocyanate.

5. Mousse de polyuréthane thermochrome selon la revendication 1 ou 4, **caractérisée en ce que** l'agent d'allongement de chaîne trifonctionnel est choisi parmi le groupe constitué par le glycérol, le triméthylolpropane, le 1,2,6-hexanetriol, la triéthanolamine, ainsi que leurs mélanges.

6. Mousse de polyuréthane thermochrome selon l'une quelconque des revendications précédentes, **caractérisée en ce que** la mousse de polyuréthane thermochrome contient de 0,5 à 5 % en poids, rapportés au poids total de la mousse de polyuréthane, dudit au moins un agent d'allongement de chaîne bifonctionnel ou trifonctionnel et/ou ledit au moins un polyesterpolyol présente une viscosité à 25 °C de 10.000 à 25.000 mPas, en particulier de 15.000 à 23.000 mPas, à chaque fois mesurée conformément à la norme DIN EN ISO 3219/B et/ou la mousse de polyuréthane thermochrome contient de 10 à 75 % en poids, rapportés au poids total de la mousse de polyuréthane thermochrome, dudit au moins un polyesterpolyol.

7. Mousse de polyuréthane thermochrome selon l'une quelconque des revendications précédentes, **caractérisée en ce que** ledit au moins un composé contenant des groupes isocyanate représente un prépolymère contenant des groupes isocyanate à base d'un polyesterpolyol et un polyisocyanate.

8. Mousse de polyuréthane thermochrome selon la revendication 7, **caractérisée en ce que** le polyisocyanate est choisi parmi le groupe constitué par l'éthylènediisocyanate, le 1,4-tétraméthylènediisocyanate, le 1,6-hexaméthylènediisocyanate, le cyclohexane-1,3-diisocyanate, le cyclohexane-1,4-diisocyanate, ainsi que des mélanges de ces isomères, le 2,4-toluènediisocyanate, le 2,6-toluènediisocyanate, ainsi que des mélanges de ces isomères, le 2,2'-méthylènediphénylisocyanate, le 2,4'-méthylènediphénylisocyanate, le 4,4'-méthylènediphénylisocyanate, le naphtylène-1,5-diisocyanate, le triphénylméthane-4,4',4"-triisocyanate ainsi que leurs mélanges, et/ou le polyisocyanate représente un mélange du 2,4-toluènediisocyanate et du 2,6-toluènediisocyanate avec une teneur en 2,4-toluènediisocyanate de 60 à 70 % poids, en particulier de 66 à 68 % en poids, à chaque fois rapportée au poids total du mélange des toluènediisocyanates.

9. Mousse de polyuréthane thermochrome selon l'une quelconque des revendications précédentes, **caractérisée en ce que** ledit au moins un colorant thermochrome est incorporé dans une microcapsule et/ou ledit au moins un colorant thermochrome est ajouté sous la forme d'un mélange avec ledit au moins un agent d'allongement de chaîne bifonctionnel ou trifonctionnel et/ou ledit au moins un colorant thermochrome est ajouté sous la forme d'un mélange avec ledit au moins un agent d'allongement de chaîne bifonctionnel ou trifonctionnel et/ou la mousse de polyuréthane thermochrome présente un changement de couleur à une température de -5 °C à 100 °C, en particulier de 0 °C à 90 °C ou de 10 °C à 80 °C ou de 20 °C à 60 °C ou de 30 °C à 50 °C en passant de coloré à incolore ou d'une première couleur à une deuxième couleur et/ou la mise en réaction pour l'obtention de la mousse de polyuréthane thermochrome est mise en œuvre en présence d'un acide gras.

10. Procédé pour l'obtention d'une mousse de polyuréthane thermochrome selon l'une quelconque des revendications 1 à 9, comprenant le fait de :
a. procurer au moins un polyesterpolyol ;
b. procurer au moins un colorant thermochrome ;
c. procurer au moins un composé contenant des groupes isocyanate , dans lequel ledit au moins un composé contenant des groupes isocyanate représente un prépolymère contenant des groupes isocyanate à base d'un polyesterpolyol ;
d. procurer au moins un agent d'allongement de chaîne bifonctionnel ou trifonctionnel ;
e. mélanger et transformer en mousse les composants a., b., c. et d. pour obtenir une mousse de polyuréthane thermochrome.

11. Procédé selon la revendication 10, **caractérisé en ce que** l'agent d'allongement de chaîne bifonctionnel est **caractérisé par** au moins une caractéristique des revendications 2 à 3 et/ou l'agent d'allongement de chaîne trifonctionnel est **caractérisé par** au moins une caractéristique des revendications 4 ou 5 et/ou ledit au moins un agent d'allongement de chaîne bifonctionnel ou trifonctionnel est procuré de manière conjointe avec ledit au moins un colorant thermochrome et/ou ledit au moins un polyesterpolyol présente une viscosité à 25 °C de 10.000 à 25.000 mPas, en particulier de 15.000 à 23.000 mPas, à chaque fois mesurée conformément à la norme DIN EN ISO 3219/B et/ou en ce que ledit au moins un colorant thermochrome est incorporé dans une microcapsule et/ou en ce que la mousse de polyuréthane thermochrome présente un changement de couleur à une température de -5 °C à 100 °C, en particulier de 0 °C à 90 °C ou de 10 °C à 80 °C ou de 20 °C à 60 °C ou de 30 °C à 50 °C en passant de coloré à incolore ou d'une première couleur à une deuxième couleur et/ou en ce que l'étape e. est mise en œuvre en présence d'un acide gras.

12. Utilisation d'une mousse de polyuréthane thermochrome selon l'une quelconque des revendications 1 à 9 pour un disque à polir et/ou pour une éponge et/ou pour un matériau isolant, en particulier pour des réacteurs chimiques.

13. Disque à polir contenant une mousse de polyuréthane thermochrome selon l'une quelconque des revendications 1 à 9.

14. Éponge contenant une mousse de polyuréthane thermochrome selon l'une quelconque des revendications 1 à 9.

15. Matériau isolant, en particulier pour des réacteurs chimiques, contenant une mousse de polyuréthane thermochrome selon l'une quelconque des revendications 1 à 9.
